(19) Europäisches Patentamt
European Patent Office
Office européen des brevets

(11) **EP 2 947 741 B1**

(12) **EUROPEAN PATENT SPECIFICATION**

(45) Date of publication and mention
of the grant of the patent:
**11.07.2018 Bulletin 2018/28**

(51) Int Cl.:
***H02J 3/36*** *(2006.01)*

(21) Application number: **14275127.0**

(22) Date of filing: **22.05.2014**

(54) **Control circuit**

Steuerungsschaltung

Circuit de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.11.2015 Bulletin 2015/48**

(73) Proprietor: **General Electric Technology GmbH
5400 Baden (CH)**

(72) Inventor: **OUTRAM, John Lewis
Staffordshire ST15 8YD (GB)**

(74) Representative: **Fischer, Michael Maria et al
General Electric Technology GmbH
GE Corporate Intellectual Property
Brown Boveri Strasse 7
5400 Baden (CH)**

(56) References cited:
**WO-A1-2011/124260      WO-A1-2013/017160
WO-A2-2012/140008**

**EP 2 947 741 B1**

**Description**

This invention relates to a control circuit.

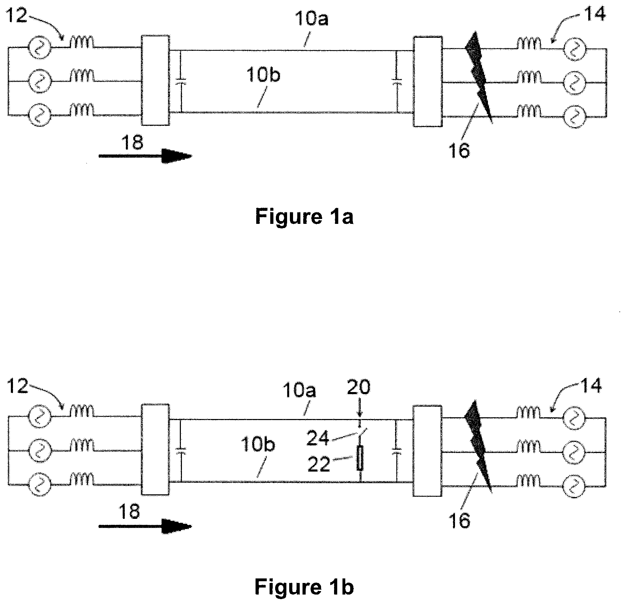

In DC power transmission schemes, DC transmission lines 10a,10b are used to interconnect a transmitting electrical network 12 and a receiving electrical network 14 to permit transfer of power between the two electrical networks 12,14, as shown in Figure 1a. In the event of a fault 16 preventing the receiving electrical network 14 from receiving power from the DC transmission lines 10a,10b, the transmitting electrical network 12 cannot interrupt the transmission of power into the DC transmission lines 10a,10b. This is because generators, such as wind turbines, cannot be switched off instantaneously and so will continue to feed energy 18 into the DC transmission lines 10a,10b. Moreover, the receiving electrical network 14 is required by a Grid Code to ride through a supply dip, e.g. where the voltage is reduced to approximately 15% of its original value, and to resume the transmission of power upon the removal of the fault 16.

Continuing to transmit power into the DC transmission lines 10a,10b results in an accumulation of excess power in the DC transmission lines 10a,10b which not only adversely affects the balance between the transmission and receipt of power by the respective electrical networks 12,14, but also might damage various components of the DC power transmission scheme, particularly as a result of high voltage stress caused by uncontrolled charging of the capacitance of the DC transmission lines 10a,10b.

One solution for preventing the accumulation of excess power is to temporarily store the excess power in DC link capacitors and other capacitors forming part of the transmitting electrical network 12. The finite energy storage capability of the transmitting electrical network 12 however limits the amount of real power that may be temporarily stored away until the receiving electrical network 14 returns to its working state.

Another solution for preventing the accumulation of excess power is the use of a load dump chopper circuit 20 to divert the excess power away from the DC transmission lines 10a,10b. Figure 1b shows a dump resistor 22 connected in series with a switch 24 across the DC transmission lines 10a, 10b. Closing the switch 24 causes current to flow from the DC transmission lines through the dump resistor 22, which in turn causes power to dissipate via the dump resistor 22. This allows excess energy to be removed from the DC transmission lines 10a,10b via the load dump chopper circuit 20.

Existing chopper circuits utilise a simple semiconductor switch to connect a resistor between the DC transmission lines in order to absorb excess energy. This type of chopper relies on the series connection and simultaneous switching of a large number of lower voltage semiconductor switches which are operated in a pulse width modulation (PWM) manner to accurately control the energy absorption. The design and operation of such a chopper circuit switch requires large passive devices and complex control methods to ensure equal sharing of the total applied voltage between the individual semiconductor switches. In addition the PWM action leads to very high rates of change of voltage and current within the chopper circuit and DC transmission lines which leads to undesirable electrical spikes and a high level of electromagnetic noise and interference. WO 2012/140008 A2 discloses the features of the preamble of claim 1.

The invention is defined by independent claim 1. According to an aspect of the invention there is provided a control circuit comprising:

first and second terminals for connection to an electrical network;
a current transmission path extending between the first and second terminals, the current transmission path including first and second current transmission path portions connected in parallel between the first and second terminals, the first and second current transmission path portions being arranged to permit a current flowing, in use, between the first and second terminals and through the first current transmission path portion to bypass the second current transmission path portion and to permit a current flowing, in use, between the first and second terminals and through the second current transmission path portion to bypass the first current transmission path portion, each current transmission path portion including a respective converter, each converter including at least one module, each module including at least one energy storage device, and wherein the first current transmission path portion includes a first power dissipation element, and the second current transmission path portion includes a second power dissipation element; and
a controller configured to selectively remove the or each energy storage device from the respective current transmission path portion to cause current to flow from the electrical network through the current transmission path and the first and second power dissipation elements so as to use the control circuit as an energy removal device to remove excess energy from the electrical network and dissipate power via the first and second power dissipation elements in order to regulate the energy level in the electrical network, wherein the controller is configured to selectively remove the or each energy storage device from the respective current transmission path portion to control first and second currents respectively flowing, in use, in the first and second current transmission path portions to simultaneously charge the converter of one of the first and second current transmission path portions and discharge the converter of the other of the first and second current transmission path portions.

The configuration of the control circuit in the manner set out above allows it to be used as an energy removal device to remove excess energy from the electrical network (such as AC or DC power transmission lines) in order to, for example, protect the electrical network from an overvoltage and to ensure a low voltage fault ride-through, if necessary. This is because the inclusion of the converters in the control circuit permits active modification of the current flowing in the or each energy conversion element to correspond to the excess energy to be removed from the electrical network.

To regulate the energy level in the electrical network, the control circuit may be configured to adopt a standby configuration in which the or each energy storage device is inserted into the respective current transmission path portion to block current from flowing in the current transmission path during normal conditions of the electrical network, or to selectively remove one or more energy storage devices from the respective current transmission path portion to cause current to flow from the electrical network through the current transmission path and the first and second power dissipation elements so as to enable excess energy to be removed from the electrical network and power to be dissipated via the first and second power dissipation elements.

The ability to selectively remove the or each energy storage device from the respective current transmission path portion has been found to allow a fast transfer of energy, i.e. excess power, from the electrical network to the control circuit and thereby enables rapid regulation of the energy level in the electrical network. This in turn permits the control circuit to respond quickly to a requirement to regulate the energy level in the electrical network in the event of a fault.

Using the converters in the control circuit to remove energy from the electrical network results in charging of the converters. Since the or each energy storage device of each converter has a finite energy storage capability, it is necessary to periodically discharge stored energy from each converter. During such discharging of stored energy from each converter, the control circuit is prevented from removing energy from the electrical network. As a consequence the control circuit is rendered incapable of presenting an uninterrupted load to the electrical network throughout the energy removal process. 3a

The provision of the controller in the control circuit according to the invention enables the simultaneous charging of the converter of one of the first and second current transmission path portions and discharging of the converter of the other of the first and second current transmission path portions. This enables the control circuit to remove energy from the electrical network, and at the same time allow the discharging converter to discharge its stored energy without preventing the control circuit from removing energy from the electrical network.

The provision of the controller in the control circuit according to the invention therefore enables the control circuit to present an uninterrupted load to the electrical network throughout the energy removal process. As such the control circuit according to the invention is capable of facilitating smooth power dissipation during the removal of energy from the electrical network, while minimising or eliminating the risk of disturbance and/or damage to the electrical network, which may not be able to tolerate interrupted loads, or obviating the need for installation of a filter circuit to enable the electrical network to tolerate interrupted loads.

The first and second currents respectively flowing, in use, in the first and second current transmission path portions may be controlled in a variety of ways to simultaneously charge the converter of one of the first and second current transmission path portions and discharge the converter of the other of the first and second current transmission path portions.

For example, in embodiments of the invention, the controller may be configured to selectively remove the or each energy storage device from the respective current transmission path portion to control the first current to flow in the first current transmission path portion in one of first and second current flow directions and to control the second current to flow in the second current transmission path portion in the other of the first and second current flow directions during the simultaneous charging of the converter of one of the first and second current transmission path portions and discharging of the converter of the other of the first and second current transmission path portions, the first current flow direction is from the first terminal to the second terminal, and the second current flow direction is from the second terminal to the first terminal.

The controller may be configured to selectively remove the or each energy storage device from the respective current transmission path portion to control each of the first and second currents to alternately charge and discharge the respective converter during the simultaneous charging of the converter of one of the first and second current transmission path portions and discharging of the converter of the other of the first and second current transmission path portions.

Such alternate charging and discharging of the respective converter enables the previously charging converter to discharge its stored energy without interrupting the operation of the control circuit to remove energy from the electrical network, thus further enhancing the capability of the control circuit according to the invention to facilitate smooth power dissipation during the removal of energy from the electrical network.

The controller may be configured to selectively remove the or each energy storage device from the respective current transmission path portion to increase or decrease the voltage across the respective converter at a linear rate of change of voltage when controlling the respective converter to change between charging and discharging. Controlling the rate of change of voltage across the respective converter in this manner provides each converter with a smooth transition between its charging voltage and its discharging voltage, thus avoiding the risk of each converter experiencing a potentially damaging voltage transient.

The controller may be configured to selectively remove the or each energy storage device from the respective current transmission path portion to cause the control circuit to draw a constant or variable power from the electrical network during the simultaneous charging of the converter of one of the first and second current transmission path portions and discharging of the converter of the other of the first and second current transmission path portions. The variable power may vary in shape depending on the requirements of the associated electrical network.

The controller may be configured to selectively remove the or each energy storage device from the respective current transmission path portion to minimise or prevent a net change in energy level of each converter over a single cycle of the control circuit during the simultaneous charging of the converter of one of the first and second current transmission path portions and discharging of the converter of the other of the first and second current transmission path portions.

Configuring the controller in this manner permits control over the individual voltage levels of the modules in the current transmission path, and thereby simplifies the design of the control circuit by allowing, for example, the use of average voltage value as feedback to control selective removal of the or each energy storage device from the respective current transmission path portion.

The controller may be configured to selectively remove the or each energy storage device from the respective current transmission path portion to modify the current flowing, in use, from the electrical network through the current transmission path and the first and second power dissipation elements to select the rate at which energy is removed from the electrical network during the simultaneous charging of the converter of one of the first and second current transmission path portions and discharging of the converter of the other of the first and second current transmission path portions.

The configuration of the control circuit according to the invention permits it to dissipate a range of powers whilst presenting an uninterrupted load to the electrical network throughout the energy removal process.

The number and arrangement of power dissipation elements in the control circuit according to the invention may vary.

The current transmission path may further include a third power dissipation element connected with the first and second energy conversion elements between the first and second terminals to define a wye or delta connection, wherein a respective branch of the wye or delta connection includes a respective one of the first, second and third power dissipation elements.

Each module of the current transmission path of the control circuit according to the invention may vary in structure and configuration. For example, each module may include at least one switching element and at least one energy storage device, the or each switching element and the or each energy storage device in each module combining to selectively provide a voltage source.

The or each energy storage device in each converter may, for example, be any type of energy storage device that is capable of storing and releasing energy, such as a capacitor, battery or fuel cell.

The or each module may be configured to have bidirectional current capability, i.e. the or each module may be configured to be capable of conducting current in two directions.

In embodiments of the invention at least one of the modules may include a pair of switching elements connected in parallel with an energy storage device in a half-bridge arrangement between a pair of module terminals to define a 2-quadrant unipolar module that can provide zero/near-zero or positive voltage and can conduct current in 2 directions.

In further embodiments of the invention at least one of the modules may include two pairs of switching elements connected in parallel with an energy storage device in a full-bridge arrangement between a pair of module terminals to define a 4-quadrant bipolar module that can provide negative, zero/near-zero or positive voltage and can conduct current in 2 directions.

Each converter may include a plurality of series-connected modules. The plurality of series-connected modules defines a chain-link converter. The structure of the chain-link converter permits build-up of a combined voltage across the chain-link converter, which is higher than the voltage available from each of its individual modules, each providing its own voltage, into the chain-link converter. In this manner switching of the or each switching element in each module causes the chain-link converter to provide a stepped variable voltage source, which permits the generation of a voltage waveform across the chain-link converter using a stepped approximation. As such the chain-link converter is capable of providing a wide range of complex voltage waveforms.

The control circuit may be configured to be connectable to a variety of electrical networks. For example, one of the first and second terminals may be connectable to a first voltage, and the other of the first and second terminals may be connectable to a second voltage or to ground.

In addition a plurality of control circuits may be combined to form a control circuit assembly. For example, a control circuit assembly may comprise first and second control circuits, each of the first and second control circuits being in accordance with any embodiment of the first aspect of the invention,

wherein one of the first and second terminals of the first control circuit is connectable to a first voltage, and the other of the first and second terminals of the first control circuit is connectable to ground; and

wherein one of the first and second terminals of the second control circuit is connectable to a second voltage, and the other of the first and second terminals of the second control circuit is connectable to ground.

Preferred embodiments of the invention will now be described, by way of non-limiting examples, with reference to the accompanying drawings in which:

Figures 1a and 1b show, in schematic form, prior art DC transmission schemes;

Figure 2 shows, in schematic form, a control circuit according to a first embodiment of the invention;

Figure 3 shows, in schematic form, the structure of a 2-quadrant unipolar module;

Figure 4 shows, in schematic form, the structure of a 4-quadrant bipolar module;

Figures 5a and 5b illustrate, in graph form, the operation of the control circuit of Figure 2;

Figure 6 illustrates, in graph form, the variation in voltages across the chain-link converters of the control circuit of Figure 2 for a range of powers dissipated by the control circuit;

Figure 7 shows, in schematic form, a conventional dynamic braking resistor;

Figure 8 illustrates, in graph form, the operation of the dynamic braking resistor of Figure 7;

Figure 9 shows, in schematic form, a control circuit according to a second embodiment of the invention; and

Figure 10 shows, in schematic form, a control circuit assembly according to a third embodiment of the invention.

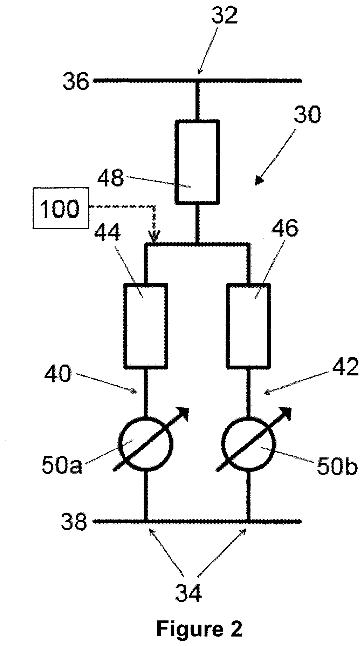

A first control circuit according to a first embodiment of the invention is shown in Figure 2 and is designated generally by the reference numeral 30.

The first control circuit 30 comprises first and second terminals 32,34, a current transmission path and a controller 100.

In use, the first and second terminals 32,34 are respectively connected to first and second DC power transmission lines 36,38. In other embodiments of the invention it is envisaged the first and second terminals 32,34 may be respectively connected, in use, to AC power transmission lines. In still other embodiments of the invention it is envisaged that, in use, one of the first and second terminals 32,34 may be connected to a DC power transmission line carrying a positive or negative voltage, and the other of the first and second terminals 32,34 may be connected to ground.

The current transmission path extends between the first and second terminals 32,34. The current transmission path includes first and second current transmission path portions 40,42.

The first and second current transmission path portions 40,42 are connected in parallel between the first and second terminals 32,34. The first current transmission path portion 40 includes a first energy conversion element in the form of a first resistor 44, and the second current transmission path portion 42 includes a second energy conversion element in the form of a second resistor 46.

The current transmission path further includes a third energy conversion element in the form of a third resistor 48. The third resistor 48 is connected with the first and second resistors 44,46 between the first and second terminals 32,34 to define a wye connection such that a respective branch of the wye connection includes a respective one of the first, second and third resistors 44,46,48.

In the embodiments shown, the third resistor 48 is connected directly to the first terminal 32 while the first and second current transmission path portions 40,42 are connected directly to the second terminal 34.

The parallel connection of the first and second current transmission path portions 40,42 between the first and second terminals 32,34 permits a current flowing, in use, between the first and second terminals 32,34 and through the first current transmission path portion 40 to bypass the second current transmission path portion 42, and permits a current flowing, in use, between the first and second terminals 32,34 and through the second current transmission path portion 42 to bypass the first current transmission path portion 40.

The first current transmission path portion 40 includes a first chain-link converter 50a. The second current transmission path portion 42 includes a second chain-link converter 50b. Each chain-link converter 50a,50b includes a plurality of series-connected modules 52.

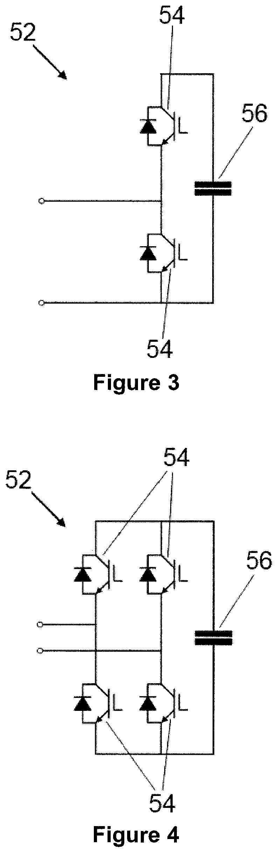

Each module 52 includes a pair of switching elements 54 and an energy storage device in the form of a capacitor 56. In each module 52, the pair of switching elements 54 is connected in parallel with the capacitor 56 in a half-bridge arrangement between a pair of module terminals to define a 2-quadrant unipolar module 52 that can provide zero/near-zero or positive voltage and can conduct current in two directions, as shown in Figure 3.

Each switching element 54 constitutes an insulated gate bipolar transistor (IGBT) that is connected in anti-parallel with a diode. It is envisaged that, in other embodiments of the invention, each IGBT may be replaced by a gate turn-off thyristor, a field effect transistor, an injection-enhanced gate transistor, an integrated gate commutated thyristor or any other self-commutated switching device.

It is envisaged that, in other embodiments of the invention, each capacitor 56 may be replaced by another type of energy storage device that is capable of storing and releasing energy, e.g. a battery or fuel cell.

The capacitor 56 of each module 52 is selectively bypassed or inserted into the respective chain-link converter 50a,50b by changing the states of the corresponding switching elements 54. This selectively directs current through the capacitor 56 or causes current to bypass the capacitor 56 so that the module 52 provides a zero/near-zero or positive voltage.

The capacitor 56 of the module 52 is bypassed when the switching elements 54 in the module 52 are configured to directly connect the module terminals together. This causes current in the respective chain-link converter 50a,50b to pass directly between the module terminals and bypass the capacitor 56, and so the module 52 provides a zero/near-zero voltage, i.e. the module 52 is configured in a bypassed mode.

The capacitor 56 of the module 52 is inserted into the respective chain-link converter 50a,50b when the switching elements 54 in the module 52 are configured to allow the current in the respective chain-link converter 50a,50b to flow into and out of the capacitor 56. The capacitor 56 then charges or discharges its stored energy so as to provide a non-zero voltage, i.e. the module 52 is configured in a non-bypassed mode.

It is envisaged that, in other embodiments of the invention, each module 52 may be replaced by another type of module that is operable to selectively provide a voltage source, e.g. another type of module that includes at least one switching element and at least one energy storage device, the or each switching element and the or each energy storage device in the module combining to selectively provide a voltage source. For example, each module 52 may include two pairs of switching elements 54 and an energy storage device in the form of a capacitor 56, wherein the pairs of switching elements 54 are connected in parallel with the capacitor 56 in a full-bridge arrangement between a pair of module terminals to define a 4-quadrant bipolar module 52 that can provide negative, zero/near-zero or positive voltage and can conduct current in two directions, as shown in Figure 4.

The structure of each chain-link converter 50a,50b permits build-up of a respective combined voltage across each chain-link converter 50a,50b, which is higher than the voltage available from each of its individual modules 52, via the insertion of the capacitors 56 of multiple modules 52, each providing its own voltage, into the respective chain-link converter 50a,50b. In this manner switching of each switching element 54 in each module 52 causes each chain-link converter 50a,50b to provide a stepped variable voltage source, which permits the generation of a voltage waveform across each chain-link converter 50a,50b using a stepped approximation. As such each chain-link converter 50a,50b is capable of providing a wide range of complex voltage waveforms.

The controller 100 is configured to control the switching of the switching elements 54 of each module 52 so that each capacitor 56 is either bypassed or inserted into the respective chain-link converter 50a,50b. Any capacitor 56 that is bypassed is selectively removed from the respective current transmission path portion 40,42. In this manner the controller 100 is configured to selectively remove each capacitor 56 from the respective current transmission path portion 40,42.

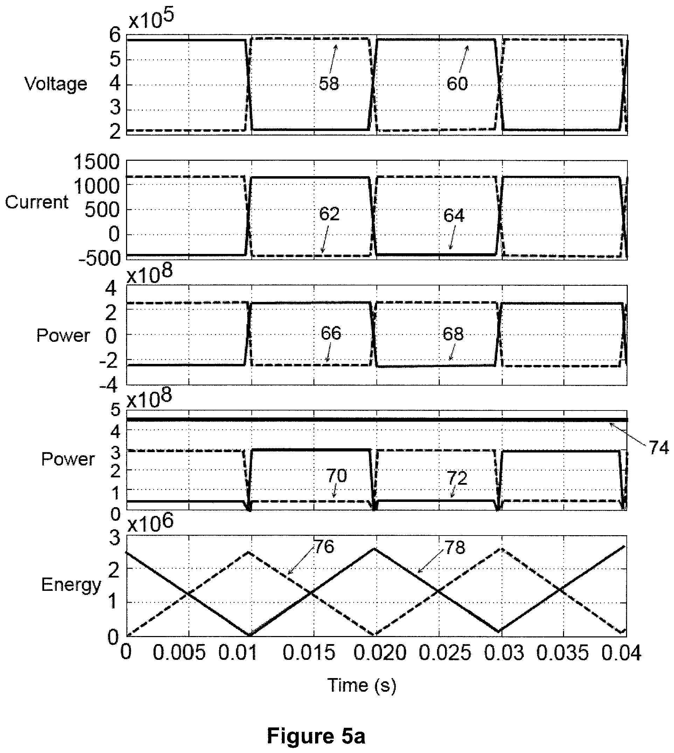

Operation of the first control circuit 30 is described as follows, with reference to Figure 5a which illustrates, in graph form, the results of a Simulink simulation.

The DC voltage across the first and second terminals 32,34 is 640kV, the maximum current flowing between the first and second terminals 32,34 is 1406 A, the maximum power that can be dissipated in the first control circuit 30 is 900 MW at 1406 A, and the simulated power dissipated in the first control circuit 30 is 450 MW at 703 A. It will be appreciated that these voltage, current and power parameters are exemplary and are intended merely to help illustrate the working of the invention, and may vary depending on the requirements of the associated power application.

During normal conditions of the DC power transmission lines 36,38, the first control circuit 30 is configured in a standby configuration in which the controller 100 switches the switching elements 54 of each module 52 to insert each capacitor 56 into the respective current transmission path portion 40,42 to block current from flowing in the current transmission path.

In the event of circumstances (e.g. a fault) requiring removal of excess energy from the DC power transmission lines 36,38, the controller 100 switches the switching elements 54 of the modules 52 of the chain-link converters 50a,50b to selectively remove each capacitor 56 from the respective current transmission path portion 40,42 to modify the voltage 58,60 across each chain-link converter 50a,50b so as to cause first and second currents 62,64 to respectively flow in the first and second current transmission path portions 40,42.

The controller 100 further switches the switching elements 54 of the modules 52 of the chain-link converters 50a,50b to control the first current 62 to flow in the first current transmission path portion 40 in a first current flow direction and to control the second current 64 to flow in the second current transmission path portion 42 in a second current flow direction. The first current flow direction is from the first terminal 32 to the second terminal 34, and the second current flow direction is from the second terminal 34 to the first terminal 32. In other words the first and second current flow directions are opposite to each other.

In the embodiment shown, the flow of the first current 62 in the first current flow direction causes the first chain-link converter 50a to charge by absorbing energy 76 from the DC power transmission lines 36,38 and the second chain-link converter 50b, while the flow of the second current 64 in the opposite, second current flow direction causes the second chain-link converter 50b to discharge its stored energy 78 into the first and second resistors 44,46 and the first chain-link converter 50a. In this manner the controller 100 selectively removes each capacitor 56 from the respective current transmission path portion 40,42 to control the first and second currents 62,64 respectively flowing, in use, in the first and second current transmission path portions 40,42 to simultaneously charge the first chain-link converter 50a and discharge the second chain-link converter 50b. At this stage the charging voltage 58 across the first chain-link converter 50a is lower than the discharging voltage 60 across the second chain-link converter 50b.

Figure 5a illustrates the power 66 at which the first chain-link converter 50a is charged, and the power 68 at the second chain-link converter 50b is charged.

Meanwhile, during the simultaneous charging of the first chain-link converter 50a and discharging of the second chain-link converter 50b, the respective flows of the first and second currents 62,64 through the first and second current transmission path portions 40,42 causes current to flow from the DC power transmission lines 36,38 through the current transmission path and to flow through each of the first, second and third resistors 44,46,48. This results in removal of power 74 from the DC power transmission lines 36,38 due to dissipation of the power 70,72 via the first, second and third resistors 44,46,48, thus enabling regulation of the energy level in the DC power transmission lines 36,38. In Figure 5a, the dissipation of power via the third resistor 48 is a constant value equal to the difference between the power 74 removed from the DC power transmission lines 36,38 and the average sum of the power 70,72 dissipated via the first and second resistors 44,46.

As such the provision of the controller 100 in the first control circuit 30 enables the first control circuit 30 to remove energy from the DC power transmission lines 36,38, and at the same time allows the discharging, second chain-link converter 50b to discharge its stored energy 78 without preventing the first control circuit 30 from removing energy from the DC power transmission lines 36,38.

After a certain period of time (which is approximately 0.01 s in Figure 5a), the controller 100 switches the switching elements 54 of the modules 52 of the chain-link converters 50a,50b to control the first current 62 to flow in the first current transmission path portion 40 in the second current flow direction and to control the second current 64 to flow in the second current transmission path portion 42 in the first current flow direction.

In the embodiment shown, the flow of the first current 62 in the second current flow direction causes the first chain-link converter 50a to discharge its stored energy 76 into the first and second resistors 44,46 and the second chain-link converter 50b, while the flow of the second current 64 in the opposite, first current flow direction causes the second chain-link converter 50b to charge by absorbing energy 78 from the DC power transmission lines 36,38 and the first chain-link converter 50a. In this manner the controller 100 selectively removes each capacitor 56 from the respective current transmission path portion 40,42 to control the first and second currents 62,64 respectively flowing, in use, in the first and second current transmission path portions 40,42 to simultaneously charge the second chain-link converter 50b and discharge the first chain-link converter 50a. At this stage the discharging voltage 58 across the first chain-link converter 50a is higher than the charging voltage 60 across the second chain-link converter 50b.

Meanwhile, during the simultaneous charging of the second chain-link converter 50b and discharging of the first chain-link converter 50a, the respective flows of the first and second currents 62,64 through the first and second current transmission path portions 40,42 causes current to flow from the DC power transmission lines 36,38 through the current transmission path and to flow through each of the first, second and third resistors 44,46,48. This also results in removal of power 74 from the DC power transmission lines 36,38 due to dissipation of the power 70,72 via the first, second and third resistors 44,46,48, thus enabling regulation of the energy level in the DC power transmission lines 36,38. As mentioned above, in Figure 5a, the dissipation of power via the third resistor 48 is a constant value equal to the difference between the power 74 removed from the DC power transmission lines 36,38 and the average sum of the power 70,72 dissipated via the first and second resistors 44,46.

As such the provision of the controller 100 in the first control circuit 30 enables the first control circuit 30 to remove energy from the DC power transmission lines 36,38, and at the same time allows the discharging, first chain-link converter 50a to discharge its stored energy 76 without preventing the first control circuit 30 from removing energy from the DC power transmission lines 36,38.

After a certain period of time (which is approximately 0.01 s in Figure 5a), the controller 100 switches the switching elements 54 of the modules 52 of the chain-link converters 50a,50b to control the first current 62 to again flow in the first current transmission path portion 40 in the first current flow direction and to control the second current 64 to again flow in the second current transmission path portion 42 in the second current flow direction.

In this manner the first and second currents 62,64 are controlled to alternately charge and discharge the first and second chain-link converters 50a,50b during the simultaneous charging of one of the first and second chain-link converters 50a,50b and discharging of the other of the first and second chain-link converters 50a,50b, and throughout the removal of energy from the DC power transmission lines 36,38. Such alternate charging and discharging of the first and second chain-link converters 50a,50b enables the previously charging chain-link converter to discharge its stored energy 76,78 without interrupting the operation of the first control circuit 30 to remove energy from the DC power transmission lines 36,38, thus further enhancing the capability of the first control circuit 30 to facilitate smooth power dissipation during the removal of energy from the DC power transmission lines 36,38.

Changing each chain-link converter 50a,50b between charging and discharging requires the voltage 58,60 across that chain-link converter 50a,50b to switch between a charging voltage and a discharging voltage. In this regard the controller 100 switches the switching elements 54 of the modules 52 of the chain-link converters 50a,50b to increase or decrease the voltage 58,60 across the respective chain-link converter 50a,50b at a linear rate of change of voltage. Controlling the rate of change of voltage across the respective chain-link converter 50a,50b in this manner provides each chain-link converter 50a,50b with a smooth transition between its charging voltage and its discharging voltage, thus avoiding the risk of each chain-link converter 50a,50b experiencing a potentially damaging voltage transient.

It can be seen from Figure 5a that the above-described operation of the first control circuit 30 results in the first control circuit 30 drawing a constant power 74 from the DC power transmission lines 36,38 during the simultaneous charging of one of the first and second chain-link converters 50a,50b and discharging of the other of the first and second chain-link converters 50a,50b. In other words the first control circuit 30 presents an uninterrupted load to the DC power transmission lines 36,38 throughout the energy removal process.

It is envisaged that, in other embodiments of the invention, the first control circuit 30 may be operated such that the first control circuit 30 draws a variable power from the DC power transmission lines 36,38 during the simultaneous charging of one of the first and second chain-link converters 50a,50b and discharging of the other of the first and second chain-link converters 50a,50b. The variable power may vary in shape depending on the requirements of the associated DC power transmission lines 36,38.

In addition it can be seen from Figure 5a that the alternate charging and discharging of the first and second chain-link converters 50a,50b during the simultaneous charging of one of the first and second chain-link converters 50a,50b and discharging of the other of the first and second chain-link converters 50a,50b results in minimisation of a net change in energy level 76,78 of each chain-link converter 50a,50b over a single cycle of the first control circuit 30 (which is approximately 0.02 s in Figure 5a).

The frequency at which each chain-link converter 50a,50b switches between charging and discharging can be chosen to suit the energy cycling capabilities of the first and second chain-link converters 50a,50b. The length of time taken by each chain-link converter 50a,50b to ramp between the charging and discharging voltages can be chosen to match the voltage change capabilities of the first and second chain-link converters 50a,50b and their associated control schemes.

It will be appreciated that, other than the trapezoidal voltage and current waveforms shown in Figure 5a, other types of voltage and current waveforms may be used to carry out the simultaneous charging of one of the first and second chain-link converters 50a,50b and discharging of the other of the first and second chain-link converters 50a,50b in the manner set out above.

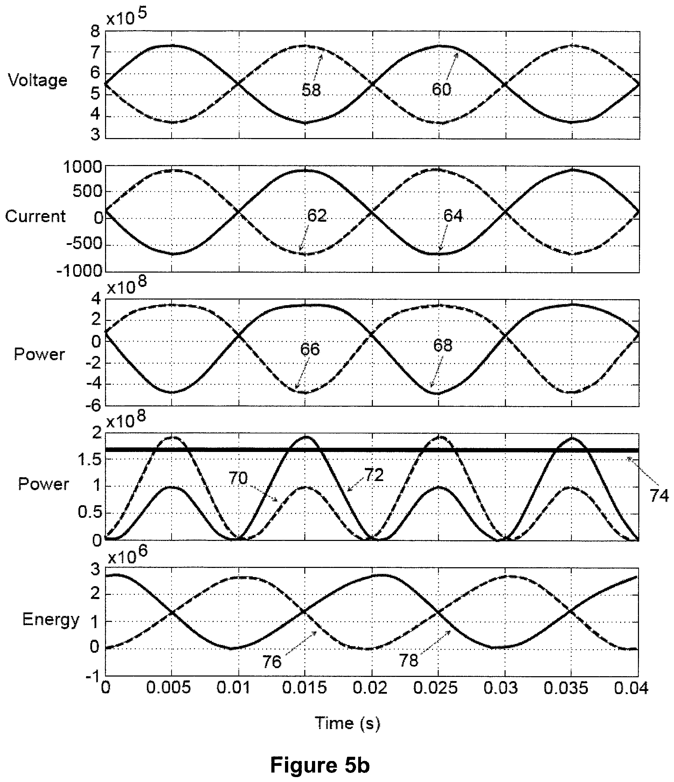

The operation of the first control circuit 30 illustrated in Figure 5b is similar to the operation of the first control circuit 30 illustrated in Figure 5a, and like features share the same reference numerals. The operation of the first control circuit 30 illustrated in Figure 5b differs from the operation of the first control circuit 30 illustrated in Figure 5a in that, in the operation of the first control circuit 30 illustrated in Figure 5b, the voltage and current waveforms are sinusoidal waveforms, instead of trapezoidal waveforms.

Preferably the controller 100 is configured to selectively remove each capacitor 56 from the respective current transmission path portion 40,42 to modify the current flowing, in use, from the DC power transmission lines 36,38 through the current transmission path and the first, second and third resistors 44,46,48 to select the rate at which energy is removed from the DC power transmission lines 36,38 during the simultaneous charging of one of the first and second chain-link converters 50a,50b and discharging of the other of the first and second chain-link converters 50a,50b.

The configuration of the first control circuit 30 permits it to dissipate a range of powers whilst presenting an uninterrupted load to the DC power transmission lines 36,38 throughout the energy removal process.

In order to select the rate at which energy is removed from the DC power transmission lines 36,38 in the manner set out above, the required voltages 80,82 across the first and second chain-link converters 50a,50b are determined as follows:

$I_{DC}$ is the current flowing between the first and second terminals 32,34.
$I_1$ is the current flowing in the first current transmission path portion 40.
$I_2$ is the current flowing in the second current transmission path portion 42.
$V_{DC}$ is the voltage across the DC power transmission lines 36,38.
$V_{STAR}$ is the voltage at the junction of the wye connection of resistors 44,46,48 relative to the voltage at the second terminal 34.
$V_1$ is the voltage 80 across the first chain-link converter 50a.
$V_2$ is the voltage 82 across the second chain-link converter 50b.
P is the maximum total power dissipated in the first, second and third resistors 44,46,48.
$P_{DBS}$ is the power drawn from the DC power transmission lines 36,38.
R is the resistance of each resistor 44,46,48. For the purposes of simplicity, the first, second and third resistors 44,46,48 are assumed to have equal resistances. In practice, the first, second and third resistors 44,46,48 may have different resistances.

$$R = \tfrac{1}{2}(V_{DC}^2 \,/\, P)$$

$$V_{STAR} = V_{DC} - I_{DC}\, R$$

$$I_{DC} = P_{DBS} \,/\, V_{DC}$$

Assuming $I_1$ and $I_2$ are positive when the first chain-link converter 50a is charging and the second chain-link converter 50b is discharging to ensure that the rate of charging of the first chain-link converter 50a is the same as the rate of discharging of the second chain-link converter 50b:

$$V_1 \times I_1 = V_2 \times I_2 \qquad\qquad (1)$$

$$I_1 = I_{DC} + I_2 \qquad\qquad (2)$$

$$V_2 = V_{STAR} + (I_2 \times R) \qquad\qquad (3)$$

$$V_1 = V_{STAR} - (I_1 \times R) \qquad\qquad (4)$$

$$(1)\ \&\ (2) => V_1 \times I_1 = V_2 \times (I_1 - I_{DC}) \qquad\qquad (5)$$

$$(2)\ \&\ (3) => V_2 = V_{STAR} + ((I_1 - I_{DC}) \times R) \qquad\qquad (6)$$

$$(5)\ \&\ (6) => V_1 \times I_1 = (V_{STAR} + ((I_1 - I_{DC}) \times R))\,(I_1 - I_{DC}) \qquad (7)$$

$$(4)\ \&\ (7) => (V_{STAR} - (I_1 \times R))\, I_1 = (V_{STAR} + ((I_1 - I_{DC}) \times R))\,(I_1 - I_{DC})$$

$$V_{STAR}\, I_1 - R\, I_1^2 = V_{STAR}\, I_1 - V_{STAR}\, I_{DC} + I_1\,((I_1 - I_{DC}) \times R) - I_{DC}\,((I_1 - I_{DC}) \times R)$$

$$-R\, I_1^2 = -V_{STAR}\, I_{DC} + R\, I_1^2 - 2R\, I_1\, I_{DC} + R\, I_{DC}^2$$

$$2R\, I_1^2 - 2R\, I_1\, I_{DC} + R\, I_{DC}^2 - V_{STAR}\, I_{DC} = 0$$

$$I_1^2 - I_1\, I_{DC} + I_{DC}^2/2 - V_{STAR}\, I_{DC}/2R = 0$$

$$I_1 = I_{DC}/2 + \sqrt{(I_{DC}^2 - 4(I_{DC}^2/2 - V_{STAR}\, I_{DC}/2R))}/2$$

$$I_1 = I_{DC}/2 + \sqrt{(2V_{STAR}\, I_{DC}/R - I_{DC}^2)}/2$$

$$I_1 = I_{DC}/2 + \sqrt{(2(V_{DC} - I_{DC}\, R)\, I_{DC}/R - I_{DC}^2)}/2$$

$$I_1 = I_{DC}/2 + \sqrt{(2V_{DC}\, I_{DC}/R - 3I_{DC}^2)}/2 \qquad (8)$$

$$(4) \,\&\, (8) => V_1 = V_{DC} - R\, P_{DBS}/\, V_{DC} - (I_{DC}/2 + \sqrt{(2V_{DC}\, I_{DC}/R - 3I_{DC}^2)}/2)R \qquad (9)$$

$$(6) \,\&\, (8) => V_2 = V_{DC} - R\, P_{DBS}/\, V_{DC} - (I_{DC}/2 - \sqrt{(2V_{DC}\, I_{DC}/R - 3I_{DC}^2)}/2)R \qquad (10)$$

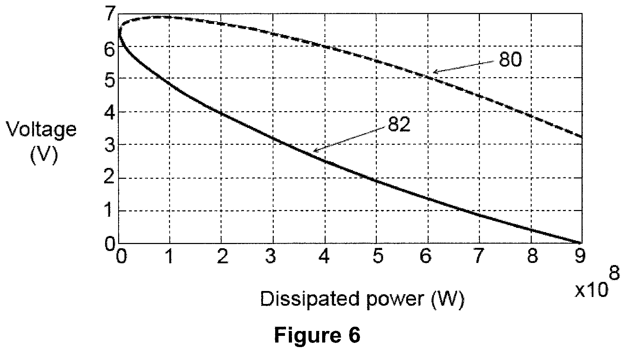

Figure 6 illustrates, in graph form, a plot of the voltages 80,82 across the first and second chain-link converters 50a,50b against a range of powers dissipated by the first control circuit 30 in accordance with Equations 9 and 10, as derived above. It can be seen from Figure 6 that it is possible to vary the voltages 80,82 across the first and second chain-link converters 50a,50b of the first control circuit 30 in order to enable the first control circuit 30 to dissipate for a range of powers.

In view of the foregoing it can be seen that the provision of the controller 100 in the first control circuit 30 enables the first control circuit 30 to present an uninterrupted load to the DC power transmission lines 36,38 throughout the energy removal process. As such the first control circuit 30 is capable of facilitating smooth power dissipation during the removal of energy from the DC power transmission lines 36,38, while minimising or eliminating the risk of disturbance and/or damage to the DC power transmission lines 36,38, which may not be able to tolerate interrupted loads, or obviating the need for installation of a filter circuit to enable the DC power transmission lines 36,38 to tolerate interrupted loads.

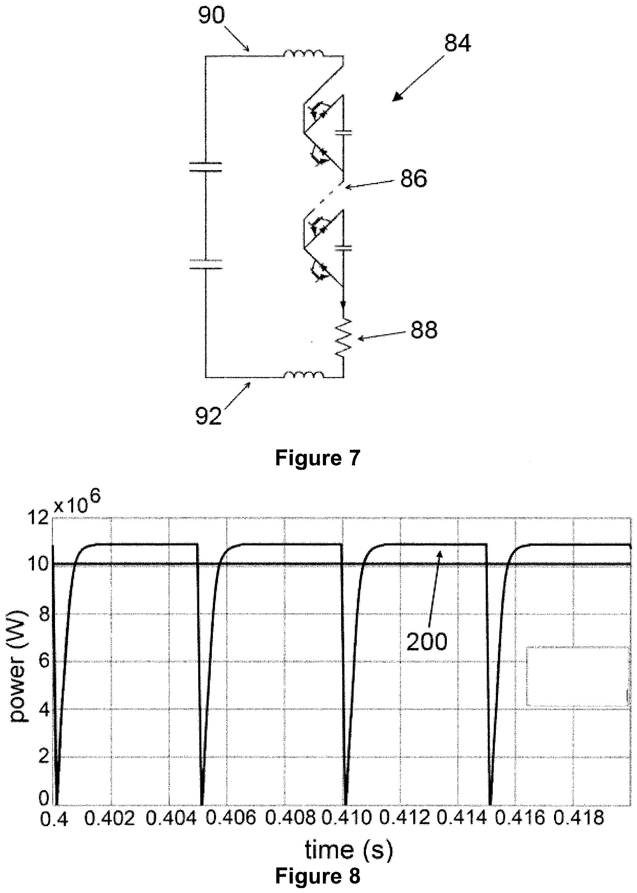

Figure 7 shows, in schematic form, a conventional dynamic braking resistor 84.

The dynamic braking resistor 84 includes a chain-link converter 86 connected in series with a dump resistor 88. The chain-link converter 86 includes a plurality of series-connected modules. Each module of the chain-link converter 86 of the dynamic breaking resistor 84 includes a pair of switching elements connected in parallel with a capacitor in a half-bridge arrangement between a pair of module terminals to define a 2-quadrant unipolar module that can provide zero/near-zero or positive voltage and can conduct current in two directions.

In use, the dynamic braking resistor 84 is connected between a pair of DC power transmission lines 90,92.

During the operation of the dynamic braking resistor 84 of Figure 7 to remove excess energy from the DC power transmission lines 90,92, the chain-link converter 86 is controlled to allow a current to flow from the DC power transmission lines 90,92 and through the dump resistor 88 to enable energy to be removed from the DC power transmission lines 90,92 and power 200 to be dissipated via the dump resistor 88. Such use of the chain-link converter 86 to remove energy from the DC power transmission lines 90,92 results in charging of the chain-link converter 86. Since each capacitor of the chain-link converter 86 has a finite energy storage capability, it is necessary to periodically discharge stored energy from the chain-link converter 86. During such discharging of stored energy from the chain-link converter 86, the dynamic braking resistor 84 is prevented from removing energy from the DC power transmission lines 90,92. As a consequence the dynamic braking resistor 84 is rendered incapable of presenting an uninterrupted load to the DC power transmission lines 90,92 throughout the energy removal process.

In contrast, since the provision of the controller 100 in the first control circuit 30 permits discharging of one of its chain-link converters 50a,50b without interrupting the removal of energy from the DC power transmission lines 36,38, the first control circuit 30 avoids the aforementioned problem of being incapable of presenting an uninterrupted load to the DC power transmission lines 36,38 throughout the energy removal process.

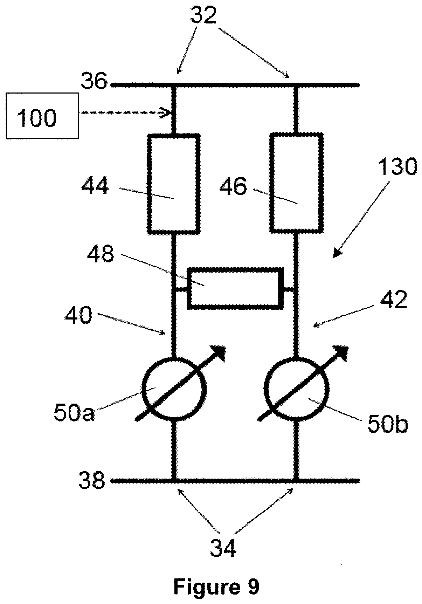

A second control circuit according to a second embodiment of the invention is shown in Figure 9 and is designated generally by the reference numeral 130. The second control circuit 130 of Figure 9 is similar in structure and operation to the first control circuit 30 of Figure 1, and like features share the same reference numerals.

The second control circuit 130 differs from the first control circuit 30 in that, in the second control circuit 130, the third resistor 48 is connected with the first and second resistors 44,46 between the first and second terminals 32,34 to define a delta connection, wherein a respective branch of the delta connection includes a respective one of the first, second and third resistors 44,46,48. More particularly, in the embodiment shown, the resistors 44,46,48 are connected between the first terminal 32 and each of the first and second chain-link converters 50a,50b.

The configuration of the resistors 44,46,48 in the delta connection results in the resistors 44,46,48 of the second control circuit 130 having individual resistance values that are three times the individual resistance values of the resistors 44,46,48 of the first control circuit 30, in the case that the three resistors 44,46,48 in any one of the first and second control circuits 30,130 are equal in terms of resistance value.

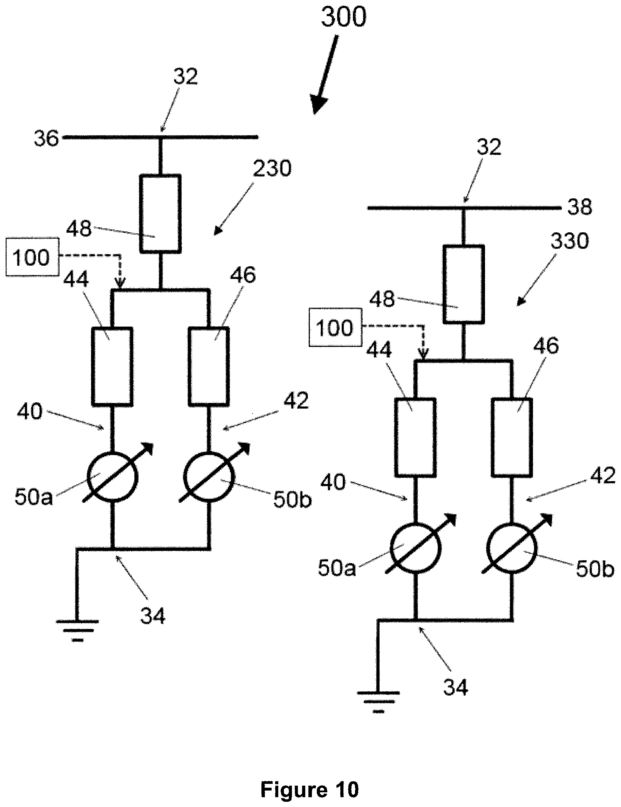

A control circuit assembly according to a third embodiment of the invention is shown in Figure 10 and is designated generally by the reference numeral 300.

The control circuit assembly 300 comprises a pair of control circuits 230,330. Each one of the pair of control circuits 230,330 is similar in structure to the first control circuit 30 of Figure 1, and like features share the same reference numerals.

In use, the first terminal 32 of a first one of the pair of control circuits 230 is connected to a first DC power transmission line 36 carrying a positive DC voltage, the first terminal 32 of the second one of the pair of control circuits 330 is connected to a second DC power transmission line 38 carrying a negative DC voltage, and the respective second terminal 34 is connected to ground.

It is envisaged that, in other embodiments of the invention, the second terminal 34 of either or both of the pair of control circuits 230,330 may be connected to the respective DC power transmission line 36,38, while the corresponding first terminal 32 is connected to ground.

The operation of each of the pair of control circuits 230,330 is similar to the above-described operation of the first control circuit 30, namely the simultaneous charging of one of the first and second chain-link converters 50a,50b and discharging of the other of the first and second chain-link converters 50a,50b to enable removal of energy from the DC power transmission lines 36,38 and at the same time allow the discharging chain-link converter 50a,50b to discharge its stored energy without preventing removal of energy from the DC power transmission lines 36,38.

In addition the arrangement of the pair of control circuits 230,330 permits use of the respective chain-link converters 50a,50b to connect the DC power transmission lines 36,38 to ground in order to handle earth faults.

In other embodiments of the invention it is envisaged that one or both of the pair of control circuits 230,330 may be similar in structure and operation to the second control circuit 130 of Figure 9.

It will be appreciated that the current transmission path of the control circuit according to the invention may vary in structure, as long as the first and second current transmission path portions are arranged to permit a current flowing, in use, between the first and second terminals and through the first current transmission path portion to bypass the second current transmission path portion and to permit a current flowing, in use, between the first and second terminals and through the second current transmission path portion to bypass the first current transmission path portion.

It is envisaged that, in other embodiments of the invention, each module of each chain-link converter may be replaced by another type of module that includes an energy storage device, e.g. a module that includes at least one switching element and at least one energy storage device, the or each switching element and the or each energy storage device in the module combining to selectively provide a voltage source. It is also envisaged that, in other embodiments of the invention, each module is preferably configured to have bidirectional current capability, i.e. the or each module may be configured to be capable of conducting current in two directions.

## Claims

1. A control circuit (30, 130) comprising:

   first and second terminals (32, 43) for connection to an electrical network (36, 38),
   a current transmission path extending between the first and second terminals (32, 34), the current transmission path including first and second current transmission path portions (40, 42) connected in parallel between the first and second terminals (32, 34), the first and second current transmission path portions (40, 42) being arranged to permit a current flowing, in use, between the first and second terminals (32, 24) and through the first current transmission path portion (40) to bypass the second current transmission path portion (42) and to permit a current flowing, in use, between the first and second terminals (32, 34) and through the second current transmission path portion (42) to bypass the first current transmission path portion (40), each current transmission path portion (40, 42) including a respective converter (50a, 50b), each converter (50a, 50b) including at least one module (52), each module (52) including at least one energy storage device (56) and wherein the first current transmission path portion (40) includes a first power dissipation element (44), and the second current transmission path portion (42) includes a second power dissipation element (46); and
   a controller (100) configured to selectively remove the or each energy storage device (56) from the respective current transmission path portion (40, 42) to cause current to flow from the electrical network through the current transmission path and through the first and second power dissipation elements (44, 46) so as to use the control circuit (30, 130) as an energy removal device to remove excess energy from the electrical network and dissipate power (70, 72) via the first and second power dissipation elements (44, 46) in order to regulate the energy level in the electrical network,

wherein the controller (100) is configured to selectively remove the or each energy storage device (56) from the respective current transmission path portion (40, 42) to control first and second currents (62, 64) respectively flowing, in use, in the first and second current transmission path portions (40, 42) to simultaneously charge the converter (50a, 50b) of one of the first and second current transmission path portions (40, 42) and discharge the converter (50a, 50b) of the other of the first and second current transmission path portions (40, 42).

2.  A control circuit according to Claim 1 wherein the controller (100) is configured to selectively remove the or each energy storage device (56) from the respective current transmission path portion (40, 42) to control the first current (62) to flow in the first current transmission path portion (40) in one of first and second current flow directions and to control the second current (64) to flow in the second current transmission path portion (42) in the other of the first and second current flow directions during the simultaneous charging of the converter (50a, 50b) of one of the first and second current transmission path portions (40, 42) and discharging of the converter (50a, 50b) of the other of the first and second current transmission path portions (40, 42), the first current flow direction is from the first terminal (32) to the second terminal (34), and the second current flow direction is from the second terminal (34) to the first terminal (32).

3.  A control circuit according to any preceding claim, wherein the controller (100) is configured to selectively remove the or each energy storage device (56) from the respective current transmission path portion (40, 42) to control each of the first and second currents (62, 64) to alternately charge and discharge the respective converter (50a, 50b) during the simultaneous charging of the converter (50a, 50b) of one of the first and second current transmission path portions (40, 42) and discharging of the converter (50a, 50b) of the other of the first and second current transmission path portions (40, 42).

4.  A control circuit according to Claim 3, wherein the controller (100) is configured to selectively remove the or each energy storage device (56) from the respective current transmission path portion (40, 42) to increase or decrease the voltage across the respective converter (50a, 50b) at a linear rate of change of voltage when controlling the respective converter (50a, 50b) to change between charging and discharging.

5.  A control circuit according to any preceding claim, wherein the controller (100) is configured to selectively remove the or each energy storage device (56) from the respective current transmission path portion (40, 42) to cause the control circuit (30) to draw a constant or variable power from the electrical network during the simultaneous charging of the converter (50a, 50b) of one of the first and second current transmission path portions (40, 42) and discharging of the converter (50a, 50b) of the other of the first and second current transmission path portions (40, 42).

6.  A control circuit according to any preceding claim, wherein the controller (100) is configured to selectively remove the or each energy storage device (56) from the respective current transmission path portion (40, 42) to minimise or prevent a net change in energy level of each converter (50a, 50b) over a single cycle of the control circuit (30, 130) during the simultaneous charging of the converter (50a, 50b) of one of the first and second current transmission path portions (40, 42) and discharging of the converter (50a, 50b) of the other of the first and second current transmission path portions (40, 42).

7.  A control circuit (30, 130) according to any preceding claim, wherein the controller (100) is configured to selectively remove the or each energy storage device (56) from the respective current transmission path portion (40, 42) to modify the current flowing, in use, from the electrical network through the current transmission path and first and second power dissipation elements (44, 46) to select the rate at which energy is removed from the electrical network during the simultaneous charging of the converter (50a, 50b) of one of the first and second current transmission path portions (40, 42) and discharging of the converter (50a, 50b) of the other of the first and second current transmission path portions (40, 42).

8.  A control circuit (30, 130) according to any preceding claim A control circuit (30, 130) according to any preceding claim , wherein the current transmission path further includes a third power dissipation element (48) connected with the first and second power dissipation elements (44, 46) between the first and second terminals to define a wye or delta connection, wherein a respective branch of the wye or delta connection includes a respective one of the first, second and third power dissipation elements (44, 46, 48).

9.  A control circuit (30, 130) according to any preceding claim, wherein each module (52) includes at least one switching element (54) and at least one energy storage device (56), the or each switching element (54) and the or each energy storage device (56) in each module (52) combining to selectively provide a voltage source.

**10.** A control circuit (30, 130) according to Claim 9, wherein at least one of the modules (52) includes a pair of switching elements (54) connected in parallel with an energy storage device (56) in a half-bridge arrangement between a pair of module terminals to define a 2-quadrant unipolar module (52) that can provide zero/near-zero or positive voltage and can conduct current in 2 directions, and/or at least one of the modules (52) includes two pairs of switching elements (54) connected in parallel with an energy storage device (56) in a full-bridge arrangement between a pair of module terminals to define a 4-quadrant bipolar module that can provide negative, zero/near-zero or positive voltage and can conduct current in 2 directions.

**11.** A control circuit (30, 130) according to any preceding claim, wherein each converter (50a, 50b) includes a plurality of series-connected modules (52).

**12.** A control circuit (30, 130) according to any preceding claim, wherein one of the first and second terminals (32, 34) is connectable to a first voltage, and the other of the first and second terminals (32, 34) is connectable to a second voltage or to ground.

**13.** A control circuit assembly (300) comprising first and second control circuits (230, 330), each of the first and second control circuits (230, 330) being in accordance with any preceding claim,
wherein one of the first and second terminals (32, 34) of the first control circuit (230) is connectable to a first voltage, and the other of the first and second terminals (32, 34) is connectable to ground; and
wherein one of the first and second terminals (32, 34) of the second control circuit (330) is connectable to a second voltage, and the other of the first and second terminals (32, 34) is connectable to ground.

**Patentansprüche**

**1.** Steuerschaltung (30, 130), umfassend:

erste und zweite Anschlüsse (32, 43) zur Verbindung mit einem Stromnetz (36, 38),
einen Stromübertragungspfad, der sich zwischen dem ersten und zweiten Anschluss (32, 34) erstreckt, wobei der Stromübertragungspfad erste und zweite Stromübertragungspfadabschnitte (40, 42) beinhaltet, die parallel zwischen dem ersten und dem zweiten Anschluss (32, 34) verbunden sind, wobei der erste und der zweite Stromübertragungspfadabschnitt (40, 42) so angeordnet sind, dass sie im Betrieb einen Stromfluss zwischen dem ersten und dem zweiten Anschluss (32, 24) und durch den ersten Stromübertragungspfadabschnitt (40) ermöglichen, um den zweiten Stromübertragungspfadabschnitt (42) zu umgehen und um zu ermöglichen, dass ein Strom im Betrieb zwischen dem ersten und dem zweiten Anschluss (32, 34) und durch den zweiten Stromübertragungspfadabschnitt (42) fließt, um den ersten Stromübertragungspfadabschnitt (40) zu umgehen, wobei jeder Stromübertragungspfadabschnitt (40, 42) einen jeweiligen Wandler (50a, 50b) beinhaltet, wobei jeder Wandler (50a, 50b) mindestens ein Modul (52) beinhaltet, wobei jedes Modul (52) mindestens eine Energiespeichervorrichtung (56) beinhaltet und wobei der erste Stromübertragungspfadabschnitt (40) ein erstes Leistungsableitungselement (44) beinhaltet und der zweite Stromübertragungspfadabschnitt (42) ein zweites Leistungsableitungselement (46) beinhaltet; **dadurch gekennzeichnet, dass**
eine Steuerung (100) zum selektiven Entfernen der oder jeder Energiespeichervorrichtung (56) von dem jeweiligen Stromübertragungspfadabschnitt (40, 42) konfiguriert ist, um zu bewirken, dass Strom aus dem Stromnetz durch den Stromübertragungspfad und durch das erste und zweite Leistungsableitungselement (44, 46) fließt, um die Steuerschaltung (30, 130) als eine Energieentfernungsvorrichtung zu verwenden, um überschüssige Energie aus dem Stromnetz zu entfernen und Leistung (70, 72) über die ersten und zweiten Leistungsableitungselemente (44, 46) zu entfernen, um das Energieniveau im Stromnetz zu regeln,
wobei die Steuerung (100) zum selektiven Entfernen der oder jeder Energiespeichervorrichtung (56) von dem jeweiligen Stromübertragungspfadabschnitt (40, 42) konfiguriert ist, um erste und zweite Ströme (62, 64) zu steuern, die jeweils im Betrieb in dem ersten und zweiten Stromübertragungspfadabschnitt (40, 42) fließen, um gleichzeitig den Wandler (50a, 50b) eines der ersten und zweiten Stromübertragungspfadabschnitte (40, 42) zu laden und den Wandler (50a, 50b) des anderen von erstem und zweitem Stromübertragungspfadabschnitt (40, 42) zu entladen.

**2.** Steuerschaltung nach Anspruch 1, wobei die Steuerung (100) zum selektiven Entfernen der oder jeder Energiespeichervorrichtung (56) von dem jeweiligen Stromübertragungspfadabschnitt (40, 42) konfiguriert ist, um den ersten Strom (62) zum Fließen in dem ersten Stromübertragungspfadabschnitt (40) in einer von ersten und zweiten Stromflussrichtungen zu steuern und um den zweiten Strom (64) zum Fließen in dem zweiten Stromübertragungspfadabschnitt (42) in die andere von erster und zweiter Stromflussrichtung zu steuern, während der Wandler (50a, 50b) eines der ersten und zweiten Stromübertragungspfadabschnitte (40, 42) geladen wird und der Wandler (50a, 50b) des anderen der ersten und zweiten Stromübertragungspfadabschnitte (40, 42) entladen wird, wobei die erste Stromflussrichtung von dem ersten Anschluss (32) zu dem zweiten Anschluss (34) und die zweite Stromflussrichtung von dem zweiten Anschluss (34) zu dem ersten Anschluss (32) ist.

**3.** Steuerschaltung nach einem der vorstehenden Ansprüche, wobei die Steuerung (100) zum selektiven Entfernen der oder jeder Energiespeichervorrichtung (56) von dem jeweiligen Stromübertragungspfadabschnitt (40, 42) konfiguriert ist, um jeden von erstem Strom und zweitem Strom (62, 64) zu steuern, um abwechselnd den jeweiligen Wandler (50a, 50b) während des gleichzeitigen Ladens des Wandlers (50a, 50b) eines von erstem und zweitem Stromübertragungspfadabschnitt (40, 42) zu laden und den Wandler (50a, 50b) des anderen von erstem und zweitem Stromübertragungspfadabschnitt (40, 42) zu entladen.

**4.** Steuerschaltung nach Anspruch 3, wobei die Steuerung (100) zum selektiven Entfernen der oder jeder Energiespeichervorrichtung (56) von dem jeweiligen Stromübertragungspfadabschnitt (40, 42) konfiguriert ist, um die Spannung über den jeweiligen Wandler (50a, 50b) bei einer linearen Änderungsrate der Spannung zu erhöhen oder zu verringern, wenn der jeweilige Wandler (50a, 50b) gesteuert wird, um zwischen dem Laden und Entladen zu wechseln.

**5.** Steuerschaltung nach einem der vorstehenden Ansprüche, wobei die Steuerung (100) zum selektiven Entfernen der oder jeder Energiespeichervorrichtung (56) von dem jeweiligen Stromübertragungspfadabschnitt (40, 42) konfiguriert ist, um die Steuerschaltung (30) dazu zu veranlassen, eine konstante oder variable Leistung aus dem Stromnetz während des gleichzeitigen Ladens des Wandlers (50a, 50b) eines des ersten und zweiten Stromübertragungspfadabschnitts (40, 42) und Entladens des Wandlers (50a, 50b) des anderen von erstem und zweitem Stromübertragungspfadabschnitt (40, 42) zu entnehmen.

**6.** Steuerschaltung nach einem der vorstehenden Ansprüche, wobei die Steuerung (100) zum selektiven Entfernen der oder jeder Energiespeichervorrichtung (56) von dem jeweiligen Stromübertragungspfadabschnitt (40, 42) konfiguriert ist, um eine Nettoänderung im Energieniveau jedes Wandlers (50a, 50b) über einen einzelnen Zyklus der Steuerschaltung (30, 130) während des gleichzeitigen Ladens des Wandlers (50a, 50b) eines vom ersten und zweiten Stromübertragungspfadabschnitt (40, 42) und Entladens des Wandlers (50a, 50b) des anderen von erstem und zweitem Stromübertragungspfadabschnitt (40, 42) zu minimieren oder zu verhindern.

**7.** Steuerschaltung (30, 130) nach einem der vorstehenden Ansprüche, wobei die Steuerung (100) zum selektiven Entfernen der oder jeder Energiespeichervorrichtung (56) von dem jeweiligen Stromübertragungspfadabschnitt (40, 42) konfiguriert ist, um den Stromfluss im Betrieb aus dem Stromnetz durch den Stromübertragungspfad und das erste und zweite Leistungsableitungselement (44, 46) zum Auswählen der Rate zu modifizieren, bei der die Energie aus dem Stromnetz während des gleichzeitigen Ladens des Wandlers (50a, 50b) eines vom ersten und zweiten Stromübertragungspfadabschnitts (40, 42) und Entladens des Wandlers (50a, 50b) des anderen von erstem und zweitem Stromübertragungspfadabschnitt (40, 42) entfernt wird.

**8.** Steuerschaltung (30, 130) nach einem der vorstehenden Ansprüche, wobei der Stromübertragungspfad weiter ein drittes Leistungsableitungselement (48) beinhaltet, das mit dem ersten und zweiten Leistungsableitungselement (44, 46) zwischen dem ersten und zweiten Anschluss verbunden ist, um eine Wye- oder Delta-Verbindung zu definieren, wobei die jeweilige Abzweigung der Wye- oder Delta-Verbindung ein jeweiliges von erstem, zweitem und drittem Leistungsableitungselement (44, 46, 48) beinhaltet.

**9.** Steuerschaltung (30, 130) nach einem der vorstehenden Ansprüche, wobei jedes Modul (52) mindestens ein Schaltelement (54) und mindestens eine Energiespeichervorrichtung (56) beinhaltet, wobei das oder jedes Schaltelement (54) und die oder jede Energiespeichervorrichtung (56) in jedem Modul (52) kombiniert werden, um selektiv eine Spannungsquelle bereitzustellen.

**10.** Steuerschaltung (30, 130) nach Anspruch 9, wobei mindestens eines der Module (52) ein Paar Schaltelemente (54) beinhaltet, das parallel mit einer Energiespeichervorrichtung (56) in einer Halbbrückenanordnung zwischen einem Paar von Modulanschlüssen zum Definieren eines unipolaren Zweiquadrantenmoduls (52) verbunden ist, das eine Null-/nahezu Null- oder positive Spannung bereitstellen kann und Strom in zwei Richtungen leiten kann, und/oder mindestens eines der Module (52) zwei Paare von Schaltelementen (54) beinhaltet, die parallel mit einer Energiespeichervorrichtung (56) in einer Vollbrückenanordnung zwischen einem Paar von Modulanschlüssen verbunden sind, um ein Vierquadranten-Bipolarmodul zu definieren, das eine negative, Null-/nahezu Null- oder positive Spannung bereitstellen kann und Strom in 2 Richtungen leiten kann.

11. Steuerschaltung (30, 130) nach einem der vorstehenden Ansprüche, wobei jeder Wandler (50a, 50b) eine Vielzahl von in Reihe verbundenen Modulen (52) beinhaltet.

12. Steuerschaltung (30, 130) nach einem der vorstehenden Ansprüche, wobei einer der ersten und zweiten Anschlüsse (32, 34) mit einer ersten Spannung verbunden werden kann und der andere von erstem und zweitem Anschluss (32, 34) mit einer zweiten Spannung oder Masse verbunden werden kann.

13. Steuerschaltungsanordnung (300), die eine erste und eine zweite Steuerschaltung (230, 330) umfasst, wobei jede der ersten und zweiten Steuerschaltungen (230, 330) nach einem der vorstehenden Ansprüche ist, wobei einer der ersten und zweiten Anschlüsse (32, 34) der ersten Steuerschaltung (230) mit einer ersten Spannung verbunden werden kann und der andere der ersten und zweiten Anschlüsse (32, 34) mit Masse verbunden werden kann; und wobei einer der ersten und zweiten Anschlüsse (32, 34) der zweiten Steuerschaltung (330) mit einer zweiten Spannung verbunden werden kann und der andere der ersten und zweiten Anschlüsse (32, 34) mit Masse verbunden werden kann.

## Revendications

1. Circuit de commande (30, 130) comprenant :

une première et une seconde bornes (32, 43) pour une connexion à un réseau électrique (36, 38), un trajet de transmission de courant s'étendant entre la première et la seconde bornes (32, 34), le trajet de transmission de courant incluant une première et une seconde parties de trajet de transmission de courant (40, 42) connectées en parallèle entre la première et la seconde bornes (32,34), la première et la seconde parties de trajet de transmission de courant (40, 42) étant agencées pour permettre un écoulement de courant, en service, entre la première et la seconde bornes (32, 34) et à travers la première partie de trajet de transmission de courant (40) pour contourner la seconde partie de trajet de transmission de courant (42) et permettre un écoulement de courant, en service, entre la première et la seconde bornes (32, 34) et à travers la seconde partie de trajet de transmission de courant (42) pour contourner la première partie de trajet de transmission de courant (40), chaque partie de trajet de transmission de courant (40, 42) incluant un convertisseur respectif (50a, 50b), chaque convertisseur (50a, 50b) incluant au moins un module (52), chaque module (52) incluant au moins un dispositif de stockage d'énergie (56) et dans lequel la première partie de trajet de transmission de courant (40) inclut un premier élément de dissipation d'énergie (44) et la seconde partie de trajet de transmission de courant (42) inclut un deuxième élément de dissipation d'énergie (46) ; **caractérisé par** :

un dispositif de commande (100) configuré pour éliminer sélectivement le ou chaque dispositif de stockage d'énergie (56) de la partie de trajet de transmission de courant respective (40, 42) pour amener le courant à s'écouler du réseau électrique à travers le trajet de transmission de courant et à travers le premier et le deuxième éléments de dissipation d'énergie (44, 46), de manière à utiliser le circuit de commande (30, 130) comme dispositif d'élimination d'énergie pour éliminer l'excès d'énergie du réseau électrique et dissiper l'énergie (70, 72) via le premier et le deuxième éléments de dissipation d'énergie (44, 46) afin de réguler le niveau d'énergie dans le réseau électrique, dans lequel le dispositif de commande (100) est configuré pour éliminer sélectivement le ou chaque dispositif de stockage d'énergie (56) de la partie de trajet de transmission de courant respective (40, 42) afin de commander un premier et un second courants (62, 64) s'écoulant respectivement en service dans la première et la seconde parties de trajet de transmission de courant (40, 42) afin de charger simultanément le convertisseur (50a, 50b) de la première et de la seconde partie de trajets de transmission de courant (40, 42) et de décharger le convertisseur (50a, 50b) de l'autre de la première et de la seconde parties de trajet de transmission de courant (40, 42).

2. Circuit de commande selon la revendication 1, dans lequel le dispositif de commande (100) est configuré pour éliminer sélectivement le ou chaque dispositif de stockage d'énergie (56) de la partie de trajet de transmission de courant respective (40, 42), afin de commander le premier courant (62) pour qu'il s'écoule dans la première partie de trajet de transmission de courant (40) dans l'un d'un premier et d'un second sens d'écoulement de courant et pour commander le second courant (64) pour qu'il s'écoule dans la seconde partie de trajet de transmission de courant (42) dans l'autre des premier et second sens d'écoulement de courant au cours du chargement simultané du convertisseur (50a, 50b) de l'une des première et seconde parties de trajet de transmission de courant (40, 42) et du déchargement du convertisseur (50a, 50b) de l'autre des première et seconde parties de trajet de transmission de courant (40, 42), le premier sens d'écoulement de courant va de la première borne (32) à la seconde borne (34) et le second sens d'écoulement de courant va de la seconde borne (34) à la première borne (32).

3. Circuit de commande selon l'une quelconque des revendications précédentes, dans lequel le dispositif de commande (100) est configuré pour éliminer sélectivement le ou chaque dispositif de stockage d'énergie (56) de la partie de trajet de transmission de courant respective (40, 42) pour commander chacun des premier et second courants (62, 64) afin qu'il charge et décharge en alternance le convertisseur respectif (50a, 50b) au cours du chargement simultané du convertisseur (50a, 50b) de l'une des première et seconde parties de trajet de transmission de courant (40, 42) et du déchargement du convertisseur (50a, 50b) de l'autre des première et seconde parties de trajet de transmission de courant (40, 42).

4. Circuit de commande selon la revendication 3, dans lequel le dispositif de commande (100) est configuré pour éliminer sélectivement le ou chaque dispositif de stockage d'énergie (56) de la partie de trajet de transmission de courant respective (40, 42) afin d'augmenter ou de diminuer la tension aux bornes du convertisseur respectif (50a, 50b) à un taux de changement linéaire de la tension lorsque l'on commande le convertisseur respectif (50a, 50b) pour qu'il change entre le chargement et le déchargement.

5. Circuit de commande selon l'une quelconque des revendications précédentes, dans lequel le dispositif de commande (100) est configuré pour éliminer sélectivement le ou chaque dispositif de stockage d'énergie (56) de la partie de trajet de transmission de courant respective (40, 42) pour amener le circuit de commande (30) à soutirer une énergie constante ou variable du réseau électrique au cours du chargement simultané du convertisseur (50a, 50b) de l'une des première et seconde parties de trajet de transmission de courant (40, 42) et du déchargement du convertisseur (50a, 50b) de l'autre des première et seconde parties de trajet de transmission de courant (40, 42).

6. Circuit de commande selon l'une quelconque des revendications précédentes, dans lequel le dispositif de commande (100) est configuré pour éliminer sélectivement le ou chaque dispositif de stockage d'énergie (56) de la partie de trajet de transmission de courant respective (40, 42) afin de minimiser ou d'empêcher un changement net de niveau d'énergie de chaque convertisseur (50a, 50b) sur un seul cycle du circuit de commande (30, 130) au cours du chargement simultané du convertisseur (50a, 50b) de l'une des première et seconde parties de trajet de transmission de courant (40, 42) et du déchargement du convertisseur (50a, 50b) de l'autre des première et seconde parties de trajet de transmission de courant (40, 42).

7. Circuit de commande (30, 130) selon l'une quelconque des revendications précédentes, dans lequel le dispositif de commande (100) est configuré pour éliminer sélectivement le ou chaque dispositif de stockage d'énergie (56) de la partie de trajet de transmission de courant respective (40, 42) pour modifier le courant s'écoulant en service du réseau électrique à travers le trajet de transmission de courant et le premier et le second éléments de dissipation d'énergie (44, 46) afin de sélectionner le débit auquel de l'énergie est retirée du réseau électrique au cours du chargement simultané du convertisseur (50a, 50b) de l'une des première et seconde parties de trajet de transmission de courant (40, 42) et du déchargement du convertisseur (50a, 50b) de l'autre des première et seconde parties de trajet de transmission de courant (40, 42).

8. Circuit de commande (30, 130) selon l'une quelconque des revendications précédentes, dans lequel le trajet de transmission de courant inclut en outre un troisième élément de dissipation d'énergie (48) connecté au premier et au deuxième éléments de dissipation d'énergie (44, 46) entre la première et la seconde borne pour définir une connexion en Y ou en delta, dans lequel une branche respective de la connexion en Y ou en delta inclut l'un respectif du premier, du deuxième et du troisième éléments de dissipation d'énergie (44, 46, 48).

9. Circuit de commande (30, 130) selon l'une quelconque des revendications précédentes, dans lequel chaque module (52) inclut au moins un élément de commutation (54) et au moins un dispositif de stockage d'énergie (56), le ou chaque élément de commutation (54) et le ou chaque dispositif de stockage d'énergie (56) de chaque module (52) se combinant pour fournir sélectivement une source de tension.

10. Circuit de commande (30, 130) selon la revendication 9, dans lequel au moins l'un des modules (52) inclut une paire d'éléments de commutation (54) connectés en parallèle à un dispositif de stockage d'énergie (56) dans un agencement à demi-pont entre une paire de bornes de module pour définir un module unipolaire à 2 quadrants (52) qui peut fournir une tension nulle ou presque nulle ou positive et peut conduire du courant dans 2 sens et/ou au moins l'un des modules (52) inclut deux paires d'éléments de commutation (54) connectés en parallèle au dispositif de stockage d'énergie (56) dans un agencement à pont intégral entre une paire de bornes de module pour définir un module bipolaire à 4 quadrants qui peut fournir une tension négative, nulle ou presque nulle ou positive et peut conduire du courant dans 2 sens.

11. Circuit de commande (30, 130) selon l'une quelconque des revendications précédentes, dans lequel chaque convertisseur (50a, 50b) inclut une pluralité de modules connectés en série (52).

12. Circuit de commande (30, 130) selon l'une quelconque des revendications précédentes, dans lequel l'une des première et seconde bornes (32, 34) peut être connectée à une première tension et l'autre de la première et de la seconde bornes (32, 34) peut être connectée à une seconde tension ou à la terre.

13. Ensemble de circuit de commande (300) comprenant un premier et un second circuits de commande (230, 330), chacun des premier et second circuits de commande (230, 330) étant conforme à l'une quelconque des revendications précédentes,
dans lequel l'une des première et seconde bornes (32, 34) du premier circuit de commande (230) peut être connectée à une première tension et l'autre des première et seconde bornes (32, 34) peut être connectée à la terre ; et
dans lequel l'une des première et seconde bornes (32, 34) du second circuit de commande (330) peut être connectée à une seconde tension et l'autre de la première et de la seconde bornes (32, 34) peut être connectée à la terre.

**Figure 1a**

**Figure 1b**

**Figure 2**

**Figure 3**

**Figure 4**

Figure 5a

Figure 5b

Figure 6

**Figure 7**

time (s)

**Figure 8**

Figure 9

**Figure 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012140008 A2